# EUROPÄISCHE PATENTANMELDUNG

(11) **EP 4 427 871 A1**
(43) Veröffentlichungstag der Anmeldung: **11.09.2024**
(21) Anmeldenummer: 23160894.4
(22) Anmeldetag: 09.03.2023
(51) Int. Cl.: B23B 51/08

(54) **BOHRWERKZEUG ZUM BEARBEITEN VON VERBUNDMATERIALIEN**

(71) Anmelder: Gühring KG, 72458 Albstadt (DE)
(72) Erfinder: v. Puttkamer, Ingo, 72458 Albstadt (DE)
(74) Vertreter: Gleim, Christian Ragnar

(57) **Zusammenfassung**

Es wird ein Bohrwerkzeug 50 zur Bearbeitung von Verbundmaterialien vorgeschlagen, das einen Schaft 59 und ein Schneidteil 55 aufweist, welches eine stufenhaltige Schneidspitze 51 und einen zwischen der Schneidspitze 51 und dem Schaft 59 befindlichen Führungsabschnitt 57 umfasst, wobei das Schneidteil 55 und/oder die stufenhaltige Schneidspitze 51 folgendes umfasst:
- eine Mehrzahl in Umfangsrichtung verteilter, zwischen der Schneidspitze 51 und dem Schaft 59 verlaufender Führungsfasen 58, die als Rundschlifffasen ausgebildet sind und in einem Radius, der einem Außenradius R des Bohrwerkzeugs 50 entspricht, um eine Drehachse A des Bohrwerkzeugs 50 angeordnet sind,
- mindestens eine Vorbohrstufe 10; 20 mit einer Mehrzahl in Umfangsrichtung verteilter Schneiden 11; 21, deren radial außenliegende Nebenschneidkanten 12; 22 in einem kleineren Radius r1; r2 als dem Außenradius R des Bohrwerkzeugs 50 angeordnet sind und an in Drehrichtung nachlaufende Außenflächen 15; 25 angrenzen, die als Hubschlifffasen mit einem Freiwinkel ausgebildet sind, und
- eine in axialer Richtung zwischen der mindestens einen Vorbohrstufe 10; 20 und den Führungsfasen 58 befindliche hintere Bohrstufe 30 mit einer Mehrzahl in Umfangsrichtung verteilter hinterer Schneiden 31, deren radial außenliegende Nebenschneidkanten 32 in dem Radius r3, der dem Außenradius R des Bohrwerkzeugs 50 entspricht, angeordnet sind und an in Drehrichtung nachlaufende Außenflächen 35 angrenzen, die als Hubschlifffasen mit einem Freiwinkel ausgebildet sind.

## Beschreibung

Die Erfindung betrifft ein Bohrwerkzeug zum Bearbeiten von Verbundmaterialien, wobei das Bohrwerkzeug einen Schaft und ein Schneidteil aufweist, welches eine stufenhaltige Schneidspitze und einen zwischen der Schneidspitze und dem Schaft befindlichen Führungsabschnitt umfasst,
wobei das Schneidteil und/oder die stufenhaltige Schneidspitze folgendes umfasst:
- eine Mehrzahl in Umfangsrichtung verteilter, zwischen der Schneidspitze und dem Schaft verlaufender Führungsfasen, die als Rundschlifffasen ausgebildet sind und in einem Radius, der einem Außenradius des Bohrwerkzeugs entspricht, um eine Drehachse des Bohrwerkzeugs angeordnet sind,
- mindestens eine Vorbohrstufe mit einer Mehrzahl in Umfangsrichtung verteilter Schneiden, deren radial außenliegende Nebenschneidkanten in einem kleineren Radius als dem Außenradius des Bohrwerkzeugs angeordnet sind und an in Drehrichtung nachlaufende Außenflächen angrenzen, und
- eine in axialer Richtung zwischen der mindestens einen Vorbohrstufe und den Führungsfasen befindliche hintere Bohrstufe mit einer Mehrzahl in Umfangsrichtung verteilter hinterer Schneiden, deren radial außenliegende Nebenschneidkanten in dem Radius, der dem Außenradius des Bohrwerkzeugs entspricht, angeordnet sind und an in Drehrichtung nachlaufende Außenflächen angrenzen.

Eine solche Gestalt eines Bohrwerkzeugs dient dazu, um in einem Werkstück ein Bohrloch dadurch herzustellen, dass zunächst ein vorderer Bohrlochabschnitt mit geringeren Radius als dem letztendlich geplanten Radius gebohrt, d.h. an der Spitze des Bohrwerkzeugs vorgebohrt wird und in einem hinteren Teil der Spitze dieses Bohrloch auf den endgültigen größeren Radius aufgeweitet wird. Diese beiden bzw. mehreren Teilschritte werden durch die stufenhaltige Schneidspitze des Bohrwerkzeugs gleichzeitig ausgeführt, aber jeweils in verschiedenen Tiefenbereichen des Werkstücks, d.h. in einer bestimmten Tiefe betrachtet jeweils zeitversetzt zueinander.

Bohrwerkzeuge im Sinne dieser Anmeldung sind beliebige Bearbeitungswerkzeuge, deren Wirkung auf ihrer schnellen Rotation basiert; beispielsweise auch Fräsbohrer.

Durch Bohrwerkzeuge zu bearbeitende Werkstücke können aus unterschiedlichsten Materialien bestehen; beispielsweise aus Verbundmaterialen. Hierzu gehören Carbon-Faserverstärkte Kunststoffe (CFK), die auch mit Metallen kombiniert sein können, beispielsweise CFK/Titan.

Es ist die Aufgabe der vorliegenden Anmeldung, ein Bohrwerkzeug bereitzustellen, das insbesondere zur Bearbeitung Carbon-Faser-verstärkter Kunststoffe, aber möglicherweise auch sonstiger Materialien besser geeignet ist als herkömmliche Bohrwerkzeuge.

Diese Aufgabe wird durch den Gegenstand des Anspruchs 1 gelöst.

Erfindungsgemäß ist vorgesehen, dass die in Drehrichtung nachlaufenden Außenflächen der hinteren Bohrstufe und mindestens einer Vorbohrstufe als Hubschlifffasen mit einem Freiwinkel ausgebildet sind. Die Führungsfasen dahinter hingegen sind Rundschlifffasen.

Die als Hubschlifffase geformten Außenflächen bilden aufgrund ihres Freiwinkels eine gegenüber der Bohrlochwandung abfallende Kontur, wobei diese Außenkontur bereits unmittelbar an bzw. hinter den Nebenschneidkanten abzufallen beginnt.

Diese Formgebung berücksichtigt den Umstand, dass faserhaltige Verbundmaterialien Fasern, insbesondere Carbonfasern enthalten, die bei der spanenden Bearbeitung ausreißen und mitgeführt werden können, aber ebenso auch hängen bleiben können oder nach einer Ausweichbewegung an und/oder neben einer vorbeiziehenden Schneide in den Randbereich eines gerade gebohrten Bohrlochsrandes zurückspringen können. Dadurch können Bohrlochränder entstehen, die hinsichtlich Gratfreiheit, Glattheit, Präzision der Formgebung und/oder Maßhaltigkeit nicht optimal gestaltet sind.

Der Erfindung liegt die Idee zugrunde, das Bohrwerkzeug so zu gestalten, dass es solchen Fasern einerseits ausweicht, ohne die Fasern andererseits am Rand der letztendlichen Bohrlochwandung zu belassen. Durch die Ausgestaltung der azimutal nachlaufenden Außenflächen in Form von Hubschlifffasen wird die Wahrscheinlichkeit verringert, dass Fasern das Bohrwerkzeug hinter den Nebenschneidkanten festklemmen könnten, denn die Hubschlifffase weicht etwaigen zurückdrängenden Fasern im Bereich azimutal hinter den Nebenschneidkanten zunächst aus. Dennoch werden überhängende Fasern durch die Nebenschneidkanten beim nächsten Vorbeigleiten bzw. beim Vorbeigleiten der nächsten, azimutal folgenden (anderen bzw. weiteren) Nebenschneidkante abgeschnitten.

Das erfindungsgemäße Bohrwerkzeug beugt so einer etwaigen Ansammlung eingeklemmter Fasern an den azimutal den Nebenschneidkanten nachlaufenden Außenflächen vor, denn die Hubschlifffasen erreichen eine gleichmäßigere Flächenpressung zwischen dieser Außenfläche, die nunmehr als Hubschlifffase gestaltet ist, und dem umfangsseitigen Flächenabschnitt der Bohrlochwandung. Als Folge davon wird die Reibung bei der spanenden Bearbeitung und die Bearbeitungstemperatur des bearbeiteten Werkstoffs bzw. Verbundmaterials verringert; auch die Wahrscheinlichkeit und/oder das Ausmaß der Ausbildung etwaiger Aufschweißungen des Verbundmaterials wird dadurch geringer.

Durch die erfindungsgemäße Kombination von Rundschlifffasen im Führungsabschnitt mit Hubschlifffasen an den Nebenschneidkanten der Schneidspitze - beispielsweise an je zwei bzw. N in Umfangsrichtung verteilten Nebenschneidkanten, und zwar vorzugsweise in jeder Schneidstufe eines mehrstufigen Bohrwerkzeugs - entsteht ein neuartiges Bohrwerkzeug, das faserverstärkte Verbundstoffe leichter schneidet, bohrt, fräst oder auf sonstige Weise bearbeitet und dabei das Verbundmaterial präziser formt als herkömmliche Bohrwerkzeuge.

Vorzugsweise ist das erfindungsgemäße Bohrwerkzeug dreistufig, so dass nach einer Vollbohrung die mittlere Schneidstufe auf einen vorletzten Radius aufbohrt, der um einen ideal bemessenen radialen Abstand bzw. Differenzbetrag unter dem endgültig zu bohrenden Außenradius zurückbleibt, um anschließend durch die hinteren Schneide und/oder deren Nebenschneidkanten eine Umfangswand mit dem endgültig zu bohrenden Außenradius in einer optimalen Wandqualität, insbesondere mit bestmöglicher Gratfreiheit und/oder Fehlerfreiheit zu formen.

Beispielsweise kann durch die vordere Schneid- bzw. Vollbohrstufe ein Bohrloch, das einen im Vergleich zum Endradius um 0,8 mm kleineren Radius besitzt, vorgebohrt werden, das dann durch die mittlere Bohrstufe bis auf 0,3 mm unterhalb bzw. innerhalb des Endradius aufgebohrt wird. Die hintere Bohrstufe (als Reibstufe ausgebildet bzw. einer solchen axial vorgelagert) erzeugt dann präzise den gewünschten endgültigen Radius der fertigen Bohrung. Durch die Wahl des Durchmessers der mittleren Bohrstufe (Aufbohrstufe) lässt sich das verbleibende restliche Aufmaß, d.h. die danach verbleibende Radiendifferenz optimieren, die durch die hintere Bohrstufe (sozusagen als Finish-Stufe) zu beseitigen ist. Für den endgültigen Radius des Bohrlochs ist der vorläufige, kleinere Bohrlochradius im Bereich der mittleren oder zumindest der vorderen Bohrstufe zwar nicht maßgebend, aber bei der dadurch erzeugten Grobzerspanung verringert die vordere Hubschlifffase die Reibung und die Bearbeitungstemperatur; gleiches gilt für die mittlere Bohr- bzw. Schneidstufe.

Insbesondere Doppelfasenbohrer können auf diese Art und Weise optimiert werden.

Eine exemplarisches Ausführungsbeispiel der Erfindung wird nachstehend anhand der Figuren erläutert. Es zeigen:
- Figur 1: eine erfindungsgemäße Außenkontur von Nebenschneidkanten, die als Hubschlifffasen ausgebildet sind; beispielhaft dargestellt an einer vordersten Bohrstufe eines Bohrwerkzeugs in Frontansicht,
- Figur 2: eine vergrößerte Detailansicht der als Hubschlifffase ausgebildeten Nebenschneidkante ähnlich wie in Figur 1, erläutert für eine beliebige Bohrstufe eines Bohrwerkzeugs,
- Figur 3: eine Seitenansicht einer exemplarischen Ausführungsform eines erfindungsgemäßen Bohrwerkzeugs mit Nebenschneidkanten, die als Hubschlifffasen ausgebildet sind, und
- die Figuren 4 bis 7: verschiedene perspektivische Detailansichten im Bereich der Schneidspitze des Bohrwerkzeugs gemäß der Ausführungsform aus oder ähnlich wie in Figur 3.

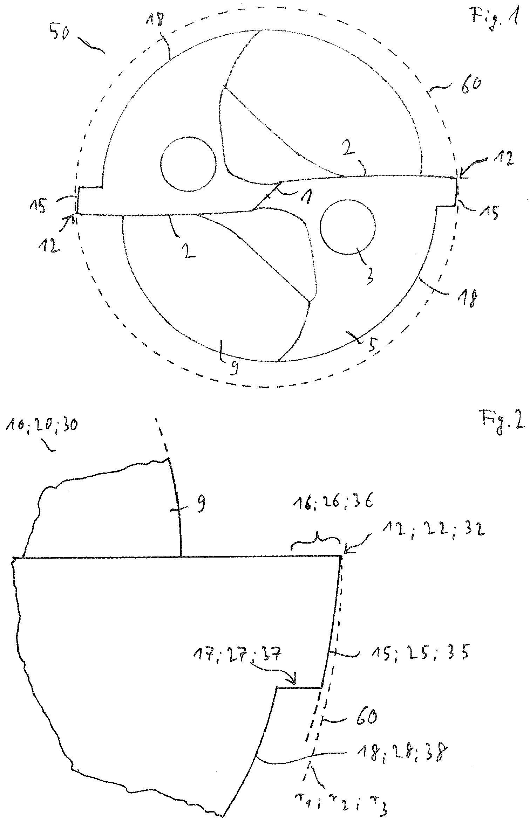

Figur 1 zeigt eine erfindungsgemäße Außenkontur von Nebenschneidkanten, die als Hubschlifffasen ausgebildet sind; beispielhaft dargestellt an einer vordersten Bohrstufe eines Bohrwerkzeugs 50 in Frontansicht, d.h. von vorn aus Richtung einer Drehachse A, die zugleich die Symmetrieachse für die Bohrlochwandung 60 eines mit dem Bohrwerkzeugs 50 gebohrten Bohrlochs bildet. Von dort aus führt eine vordere Querschneide 1 zu vorderseitigen Hauptschneiden bzw. Hauptschneidkanten 2. Die Schneiden der vordersten Schneidstufe umfassen weiterhin Nebenschneidkanten 12, die an dem Umfangsabschnitt der vorläufigen Bohrlochwandung 60 im axialen Bereich dieser Schneidstufe anliegen. Sind zwei oder mehr Bohrstufen vorhanden, so schneiden deren Schneiden, insbesondere deren Nebenschneidkanten Abschnitte der (endgültigen oder vorläufigen) Bohrlochwandung 60 mit einem jeweiligen Radius (in Figur 1 gestrichelt dargestellt) aus dem bearbeiteten Material aus.

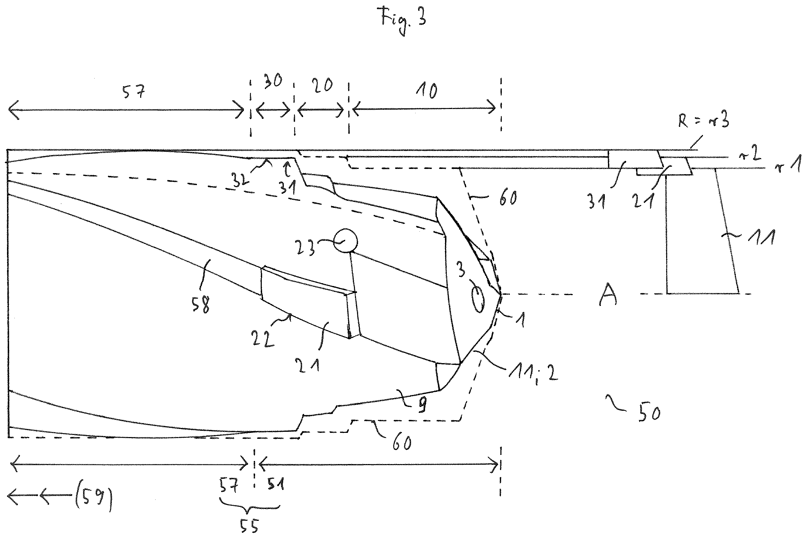

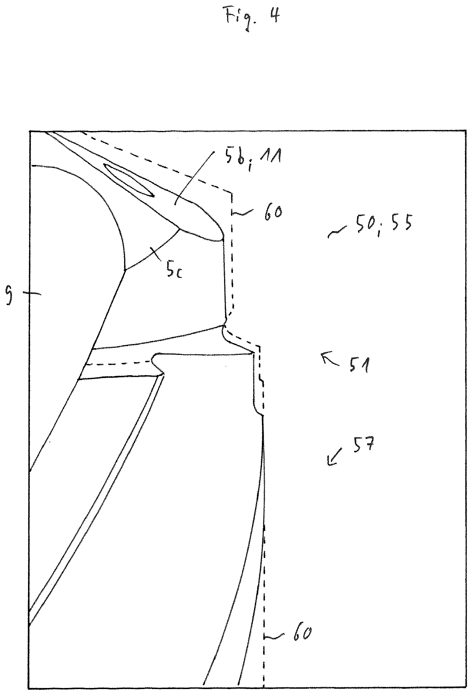

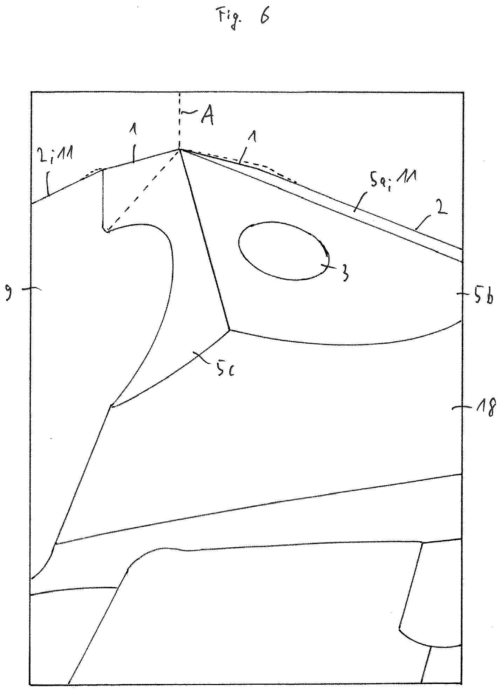

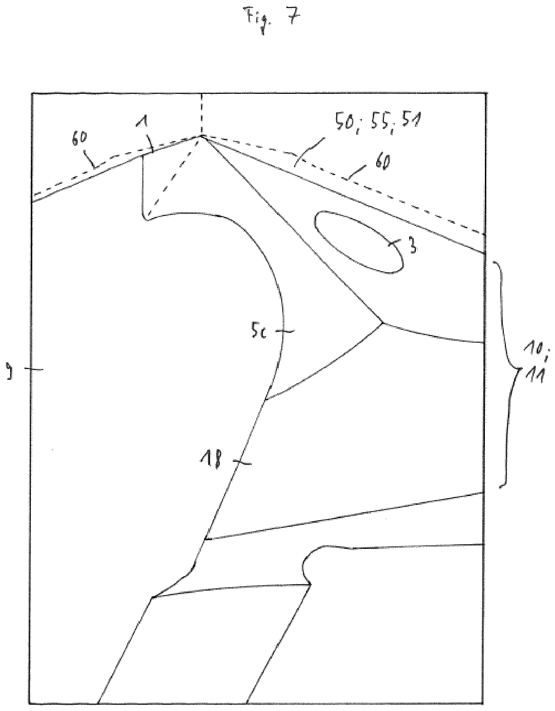

Alle Ausführungsformen von Bohrwerkzeugen 50 dieser Anmeldung können wie in Figur 1 mit zweizähliger oder andernfalls N-zähliger Drehsymmetrie, d.h. mit jeweils zwei oder N (für N > 2) jeweiligen Schneiden, insbesondere Nebenschneidkanten (und entsprechend vielen sonstigen Elementen) versehen sein, und zwar in jeder Bohrstufe. Die in Figur 1 gezeigte vorderste Schneidstufe braucht nur eine einzige vorderseitige Freifläche 5 pro Hauptschneidkante 2 zu besitzen. In der Praxis können auch zwei oder drei vorderseitige Freiflächen 5a, 5b, 5c (vgl. die Figuren 4 bis 7) vorgesehen sein. Diese Freiflächen bleiben beim Bohren bzw. beim Schnitt hinter der durch die Hauptschneidkante 2 und die Querschneide 1 (vorläufig) geschnittenen Vorderwand zurück. Zusätzlich zu Kanalaustrittsöffnungen 3 in vorderseitigen Freiflächen 5 können weitere Kanalaustrittsöffnungen 23 (vgl. Figur 3) an oder zwischen weiteren Schneid- bzw. Bohrstufen vorhanden sein. Durch diese Öffnungen 3; 23 wird beim Bohren oder anderweitigen Bearbeiten des Werkstücks flüssiger Kühlschmierstoff in das Bohrloch bzw. in die erzeugte Ausnehmung hineingepresst, der die Temperatur und/oder Reibung herabsetzt. Zwischen den mehreren azimutal, d.h. in Umfangsrichtung verteilten Schneiden verlaufen Spannuten 9 zum Abführen der Späne des ausgebohrten Materials und des verbrauchten Kühlschmierstoffs.

Bei der Bearbeitung rotieren die Nebenschneidkanten 12; 22; 32 der jeweiligen Schneidstufe 10; 20; 30 am umfangsseitigen Seitenwandabschnitt der Bohrlochwandung 60. In Umfangsrichtung bzw. in Drehrichtung läuft jeder Nebenschneidkante 12; 22; 32 eine Außenkontur auf dem Umfang oder zumindest auf der Außenseite der jeweiligen Schneide nach. Das Nachlaufen bezieht sich auf die Drehrichtung, die üblicherweise im Uhrzeigersinn erfolgt, und zwar bei Draufsicht auf das gebohrte Werkstück betrachtet, d.h. entgegengesetzt zu der in Figur 1 dargestellten Vorderansicht 1.

Die rechts in Figur 1 dargestellte nachlaufende Nebenschneidkante 12 ist in Figur 2 in vergrößertem Maßstab dargestellt. Zugleich sind in Figur 2 für die übrigen Nebenschneidkanten 22 und/oder 32 vergleichbarer Geometrie (jedoch bei größerem Radius r2 bzw. r3) die jeweiligen Bezugszeichen eingetragen. Die Figuren 1 und 2 veranschaulichen somit exemplarisch einen erfindungsgemäß bevorzugten Verlauf der Außenkonturen; diese werden nun anhand von Figur 2 und den nachfolgenden Figuren für eine beliebig auswählbare Bohr- bzw. Schneidstufe eines mehrstufigen Bohrwerkzeugs 50 erläutert.

Gemäß Figur 2 besitzt die jeweilige Schneide 11; 21; 31 (vgl. Figur 3) der jeweiligen Bohr- bzw. Schneidstufe 10; 20; 30 eine der Nebenschneidkante 12; 22; 32 nachlaufende Außenfläche 15; 25; 35.

Im einfachsten Fall würde die Außenfläche dem Radius der jeweiligen Bohrstufe entsprechen, der in Figur 2 als r1, r2 und r3 (mit r1 < r2 < r3) für die drei Bohrstufen bezeichnet und gestrichelt dargestellt ist (die andere gestrichelte Linie im Bereich der Spannut 9 weiter hinten bzw. der daran angrenzenden Spannutfläche zählt nicht dazu). Die Figur 2 gilt somit wahlweise für jede der (beispielsweise zwei oder drei) Schneidstufen, jedoch mit jeweils unterschiedlichem Abbildungsmaßstab wegen der unterschiedlich großen Schneidradien r1, r2 und/oder r3.

Eine dem jeweiligen Radius folgende Außen- oder Umfangsfläche liegt gewöhnlich in einem Führungsbereich 57 vor, der sich (vgl. Figur 3) zwischen der vorderseitigen Schneidspitze 51 und einem rückseitigen Schaft 59 eines Bohrwerkzeugs 50 erstreckt und somit den größten axialen Abschnitt des Schneidteils 55 ausmacht. In dem Führungsabschnitt 57 entspricht die Außenfläche dann einem Flächenabschnitt einer Zylinderfläche, die denselben Radius R wie das Bohrwerkzeug 50 im Bereich des Führungsabschnitts 57 besitzt. Durch den direkten Kontakt, d.h. das direkte Anliegen der (bei zweizähliger Symmetrie genau zwei) zylindrischen Flächenabschnitte 58 an der Bohrlochwandung 60 im Führungsabschnitt 57 wird eine sichere Führung des Bohrwerkzeugs 50 in dem Bohrloch gewährleistet.

Gewöhnlich erstreckt sich - azimutal, d.h. in Dreh- oder Umfangsrichtung - die unmittelbar am Bohrlochradius anliegende Außenfläche 15; 25; 35 nicht über den gesamten azimutalen Abschnitt, den die Außenseite des jeweiligen Führungskeils zwischen den beiden benachbarten Spannuten 9 im Führungsabschnitt 57 einnimmt, sondern ist in einem gewissen Abstand hinterschliffen. Dadurch endet die unmittelbar anliegende Außenfläche 15; 25; 35 in einem azimutalen Abstand bzw. Drehwinkel hinter der in Drehrichtung vorderseitigen Kante, deren Position derjenigen der hintersten Nebenschneidkante (in Figur 2 und 3 die Kante 32 der hintersten Schneidstufe 30) entspricht. Durch diese Hinterschleifung bzw. Hinterschneidung ist im Führungsabschnitt 57 die unmittelbar am Bohrlochradius R (vgl. Figur 3) anliegende Außenfläche, d.h. die Rundschliff- oder Führungsfase 58 in Umfangsrichtung auf einen schmalen nachlaufenden, an die Bohrlochwandung 60 angeschmiegten Materialsteg verkürzt. Die in Drehrichtung verschmälerte Kontakt- oder Anlagefläche verhindert, dass das Bohrwerkzeug 50 im Bohrloch festklemmt, da im Bereich des Hinterschliffs bzw. Freischliffs hinter dem anliegenden Materialsteg die Außenkontur des Führungskeils von der Bohrlochwandung 60 beabstandet, d.h. radial zurückversetzt ist. Somit liegt zumindest die verschmälerte Außenfläche 58 des Führungskeils im Führungsabschnitt 57 ganzflächig an der Bohrlochwandung an; dieser Rundschliff der Anlagefläche ergibt sich bereits aus der Rotation des Bohrers oder anderweitigen Bohrwerkzeugs 50 während seiner Fertigung.

Diese Geometrie der in Rundschliff gefertigten (und hinterschliffenen) Führungsfasen 58 zwischen den Spannuten 9 entsteht bei der Herstellung des Bohrwerkzeugs 60 automatisch auch vorne an der Bohr- oder Schneidspitze 51, denn hier (aus der Richtung der axialen Drehachse A her von vorne) beginnt das Fräsen der Spannuten und die Nachbearbeitung der dazwischen befindlichen Schneidkeile. Dieser Rundschliff entsteht insbesondere an den den Nebenschneidkanten 32 der hintersten Schneidstufe 30 nachlaufenden Außenflächen 35, die das Bohrloch mit dem endgültigen Radius R erzeugen. Der Rundschliff entsteht normalerweise aber auch an den übrigen Schneidstufen eines mehrstufigen Bohrwerkzeugs 50, denn auch vorgelagerte weitere Bohrstufen 10, 20 weisen im Normalfall den Nebenschneidkanten 10; 20 nachlaufende, azimutal verschmälerte Außenflächen 15; 25 auf, die sich an einen jeweiligen kleineren Radius r1; r2 anschmiegen. Dabei ergibt sich der Rundschliff herstellungsbedingt beim Herstellen des Bohrwerkzeugs 50, wenn ein dafür bestimmter Rohling von einem Außendurchmesser R an seiner Spitze auf einen kleineren Radius r1 bzw. r2 zurückgeschliffen wird. Im Übrigen sorgt auch im Bereich der Schneidspitze 51 der Rundschliff für eine gute Führung schon zu Beginn des eigentlichen Bohrvorgangs mittels des fertigen Bohrwerkzeugs 50, wenn dieses in das Werkstück eintaucht.

Abweichend hiervon ist erfindungsgemäß jedoch gemäß Figur 2 (und den übrigen Figuren) gerade keine sich an den jeweiligen Radius r1, r2, r3 anschmiegende Außenfläche 15; 25; 35 vorgesehen. Stattdessen besitzt (in mindestens einer Schneidstufe) die nachlaufende Außenfläche 15; 25; 35 an der Nebenschneidkante 12; 22; 32 einen endlichen, d.h. nicht verschwindenen Freiwinkel (größer als 0°) relativ zur Bohrlochwandung 60 bzw. deren umfangsseitiger Wandfläche. Eine solche umfangsseitige Außenfläche 15; 25; 35, die bereits aufgrund dieses Winkels unmittelbar hinter der Nebenschneidkante 12; 22; 32 damit beginnt, sich kontinuierlich von der Bohrlochwandung 60 nach innen zu entfernen, wird hier als Fläche bzw. Fase mit Hubschliff oder kurz als als Hubschlifffase bezeichnet. Sie bildet eine Freifläche relativ zum Umfangsabschnitt der Bohrlochwand 60, von der sie sich nach innen entfernt.

Durch die Hubschlifffase 15, 25, 35 in Verbindung mit einer mehrstufigen Bohrung zur schrittweisen Annäherung an den endgültigen Außendurchmesser R des Bohrlochs ist bei Verbundmaterialien eine besonders hohe Maßhaltigkeit bzw. Formgenauigkeit der Bohrlochwandung 60 erzielbar, die durch die Carbon- oder sonstigen Fasern des Verbundmaterials nicht beeinträchtigt wird.

Figur 3 zeigt eine Seitenansicht einer solchen exemplarischen Ausführungsform eines erfindungsgemäßen Bohrwerkzeugs mit drei Schneidstufen, bei der die den Nebenschneidkanten nachlaufenden Außenflächen einer Schneidstufe, vorzugsweise jedoch mehrerer und insbesondere aller Schneidstufen 10, 10, 30 als Hubschlifffasen ausgebildet sind. Somit sind die Außenflächen 15, 25 und/oder 35 zumindest einer Schneidstufe 10, 20, 30, vorzugsweise mehrerer und insbesondere aller Schneidstufen 10, 20, 30 Hubschlifffasen.

Zur weiteren Veranschaulichung zeigen die weiteren Figuren 4 bis 7 - die hier gemeinsam mit Figur 3 erläutert werden - verschiedene perspektivische Detailansichten im Bereich der Schneidspitze des Bohrwerkzeugs gemäß der Ausführungsform aus Figur 3, jedoch in größerem Abbildungsmaßstab; übrigens mit dem Unterschied gegenüber Figur 1, dass an der Vorderseite der vordersten Schneidstufe 10 den Hauptschneidenkanten 2 drei bzw. mehrere (frontale) Freiflächen 5a, 5b, 5c nachfolgen, was aber keinen Einfluss auf die Formgestaltung an den äußeren, d.h. umfangsseitigen Flächenabschnitten der Bohrlochwandung 60 hat.

Oben rechts in Figur 3 sind schematisch die Schneiden 11, 21, 31 aller drei Schneidstufen - gedanklich durch azimutale Drehung in die obere Hälfte der Zeichenebene hineingedreht - in ihrer Anordnung relativ zueinander bezüglich der axialen und radialen Richtung dargestellt. Nach außen hin enden die Schneiden 11, 21, 31 an den jeweiligen Radien r1, r2, r3, aber aufgrund der Hubschlifffasen 15, 25, 35 heben sie sich in Drehrichtung schon unmittelbar hinter ihren Nebenschneidkanten 12, 22, 32 wieder nach innen von diesen Radien r1, r2, r3 der Bohrlochwandung 60 ab.

Dort wo in den Figuren 3 bis 7 die Außenkontur des Bohrwerkzeugs 50 ansonsten hinter der gestrichelt markierten Bohrlochwandung 60 zurückbleibt, ist dies die Folge der Spannuten 9 und der übrigen Aussparungen und der jeweiligen Betrachtungsrichtung.

Vorzugsweise bohrt die hintere Schneide 31 (mit ihren Hubschlifffasen 35 an den Nebenschneidkanten 32) das Loch 60 in Höhe der hinteren Schneidstufe 30 auf den endgültigen Radius r3 = R auf, wohingegen im dahinter folgenden Führungsabschnitt 57 die (als Rundschliffasen ausgebildeten) Führungsfasen 58 lediglich an diesem Radius R = r3 entlang reiben, d.h. eine Reibfase bilden.

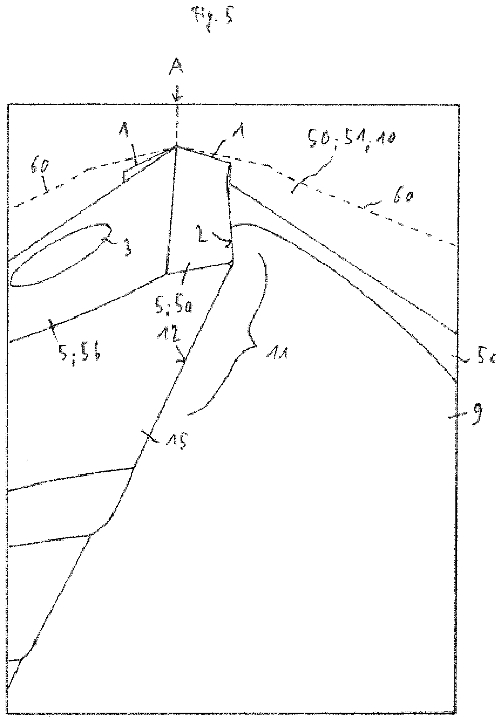

Das Umfangsprofil des Bohrwerkzeugs 50 am Übergang zwischen den drei Schneidstufen ist in Figur 4 vergrößert dargestellt. Die Abfolge der weiteren Figuren 5 bis 7 zeigt zusätzlich zur mittleren und hinteren Schneidstufe 20, 30 auch die vorderseitigen Abschnitte der vordersten Schneidstufe 10, und zwar für drei verschiedene azimutale Betrachtungswinkel in der Reihenfolge, wie die erste Schneide 11 bzw. das Bohrwerkzeug 50 insgesamt in Drehrichtung durch das Material des Werkstücks hindurchfährt.

Die in der zweiten vorderseitigen Freifläche 5b angeordneten Kanalaustrittsöffnungen 3 führen den Kühlschmierstoff hauptsächlich der ersten Schneidstufe 10 zu; für die anderen Schneidstufen 20, 30 dienen zusätzliche Kanalaustrittsöffnungen 23 weiter hinten (Figur 3).

Die vorderseitige bzw. frontale Hauptschneidkante 2 der ersten Schneidstufe (und die vorderseitigen Schneidkanten der mittleren und hinteren Schneidstufe) reicht bis zum jeweiligen Außenradius r1 (bzw. r2 und r3), aber die Maßhaltigkeit und die Fertigungsbedingungen wie Reibung, Temperatur und das Auftreten etwaiger Aufschweißungen werden maßgeblich durch die umfangsseitigen Außenflächen 15, 25, 35 bestimmt, die der jeweiligen Nebenschneidkante 12, 22, 32 in azimutaler Richtung nachlaufen.

So läuft an der mittleren Schneide 21 die als Hubschliffase geformte Außenfläche 25 der Nebenschneidkante 22 in azimutaler Richtung nach, und sie ist durch eine azimutal rückseitige Stufe 27, die durch Hinterschleifung entsteht, gegenüber der azimutal nachfolgenden Grundfläche 28 erhöht, d.h. weiter von der Drehachse A entfernt als die Grundfläche 28, und außerdem deutlich schmaler ausgebildet als diese.

Ferner läuft an der hinteren Schneide 31 die als Hubschliffase geformte Außenfläche 35 der Nebenschneidkante 32 in azimutaler Richtung nach, und sie ist durch eine azimutal rückseitige Stufe 37, die durch Hinterschleifung entsteht, gegenüber der azimutal nachfolgenden Grundfläche 38 erhöht, d.h. weiter von der Drehachse A entfernt als die Grundfläche 38, und außerdem deutlich schmaler ausgebildet als diese.

An den Stufen 17, 27, 37 kann der Radius, genauer gesagt der von der Drehachse A aus zu messende radiale Abstand der Außenkontur - ausgehend von dem azimutal hinteren, d.h. in Drehrichtung hinteren bzw. rückseitigen Radius der Hufschlifffase 15, 25, 35 - entweder
- sprunghaft bzw. stufenförmig auf den kleineren, vorzugsweise konstanten Radius der Grundfläche 18, 28, 38 zurückspringen oder
- zumindest mit größerer Steilheit der Radienänderung pro azimutaler Winkeländerung auf den kleineren, vorzugsweise konstanten Radius der Grundfläche 18, 28, 38 abfallen.

Die Hubschlifffasen 15, 25, 35 reichen aufgrund ihres (von 0° verschiedenen) Freiwinkels nur an den seitlichen, in Drehrichtung vorderseitigen und somit vorlaufenden Nebenschneidkanten 12, 22, 32 an die jeweilige Zylinderfläche mit dem jeweiligen Radius r1, r2, r3 heran. So reicht etwa die Hubschlifffase 35 der hinteren Schneide 31 nur an der Nebenschneidkanten 32 an die weiteste Zylinderfläche mit dem Radius r3 = R heran. Im Gegensatz dazu liegt die im Führungsabschnitts 57 dahinter angeordnete jeweilige Rundschlifffase 58 über ihre gesamte azimutale Breite an der Umfangsfläche mit dem Radius r3 = R an.

Der Übergang zwischen der hinteren Hubschlifffase 35 und der Rundschlifffase 58 entspricht - wie aus Figur 2 für den Fall des größten Radius r3 entnehmbar ist - einer azimutal zunehmenden radialen Abstandsdifferenz zwischen einem axial hinteren Ende der Außenfläche 35 der hinteren Schneidstufe 30 und einem axial vorderen Ende der jeweiligen Führungsfase 58. Diese Übergang bzw. die dortige Übergangsfläche dazwischen kann unterschiedlich geformt sein. Zumindest kann sie eine mit einem azimutalen Winkel zunehmende Abstandsdifferenz zwischen
- dem winkelabhängig variierenden Abstand der Außenfläche 35 der hinteren Bohrstufe 30 von der Drehachse A und
- dem konstanten, dem Radius r3 = R entsprechenden Abstand der Führungsfase 58 von der Drehachse A
überbrücken.

Diese Überbrückung kann sprunghaft oder im Vergleich zu den Flächen 35, 58 zumindest relativ steil in axialer Richtung erfolgen, so dass die Übergangsfläche mindestens eine oder zwei Kanten aufweist, nämlich
- eine gebogene äußere Kante, die an das vordere Ende der Rundschlifffase, d.h. Führungsfase 58 am Außenradius r3 = R des Bohrwerkzeugs 50 angrenzt, und/oder
- eine gebogene innere Kante, die an das hintere Ende der äußersten Hubschlifffase 35 angrenzt.

Die Übergangsfläche kann quer zur Drehachse oder lediglich schräg dazu verlaufen; im letzteren Fall variiert die Richtung ihrer Flächennormalen lokal. In beiden Fällen kann die Übergangsfläche relativ steil verlaufen, d.h. mit der axialen Richtung der Drehachse einen kleineren Winkel einschließen als mit Richtungen in der Ebene senkrecht zur Drehachse.

Der Übergangsfläche zwischen Hubschlifffase 35 und Rundschlifffase 58 kann aber auch weniger steil verlaufen. Sie kann ferner kontinuierlich in die Hubschlifffase 35 und/oder die Rundschlifffase 58 übergehen, ohne dass eine klar erkennbare gebogene innere Kante und/oder gebogene äußere Kante vorliegt.

Die Übergangsfläche kann insbesondere eine in Richtung der Drehachse A zu messende axiale Länge besitzen. Sie kann insbesondere auch drei oder vier Kanten aufweisen.

Die Übergangsfläche kann von der Hubschlifffase 35 zur Rundschlifffase 58 kontinuierlich ansteigen oder alternativ zunächst unter den azimutal variierenden Radius, d.h. unter den radialen Abstand der Hubschlifffase 35 von der Drehachse abfallen, bevor sie bzw. dieser radiale Abstand bis zur Rundschlifffase 58 ansteigt. Dies gilt insbesondere unabhängig davon, ob die Übergangsfläche kontinuierlich in die Hubschlifffase 35 und/oder Rundschlifffase 58 übergeht oder durch eine innere und/oder äußere gebogene Kante davon abgegrenzt ist.

### Bezugszeichen

- 1: Querschneide
- 2: Hauptschneidkante (erste Schneide)
- 3: (erste) Kanalaustrittsöffnung
- 4: Spanfläche
- 5: vorderseitige Freifläche
- 5a: erste vorderseitige Freifläche
- 5b: zweite vorderseitige Freifläche
- 5c: dritte vorderseitige Freifläche
- 8: azimutales Stufenprofil
- 9: Spannut
- 10: erste Schneidstufe; Vorbohrstufe
- 11: erste Schneide
- 12: erste Nebenschneidkante
- 15: Außenfläche
- 16: Vorsprung
- 17: Stufe
- 18: Grundfläche
- 20: zweite Schneidstufe; Vorbohrstufe
- 21: zweite Schneide
- 22: zweite Nebenschneidkante
- 23: (zweite) Kanalaustrittsöffnung
- 25: zweite Außenfläche
- 26: Vorsprung
- 27: Stufe
- 28: Grundfläche
- 30: dritte Schneidstufe; hintere Bohrstufe
- 31: dritte Schneide
- 32: dritte Nebenschneidkante
- 35: dritte Außenfläche
- 36: Vorsprung
- 37: Stufe
- 38: Grundfläche
- 50: Bohrwerkzeug
- 51: Schneidspitze
- 55: Schneidteil
- 57: Führungsabschnitt
- 58: Führungsfase
- 59: Schaft
- 60: Bohrlochwandung
- A: Drehachse
- R: Außenradius
- r1: erster Radius
- r2: zweiter Radius
- r3: dritter Radius

## Patentansprüche

1. Bohrwerkzeug (50) zur Bearbeitung von Verbundmaterialien,
wobei das Bohrwerkzeug (50) einen Schaft (59) und ein Schneidteil (55) aufweist, welches eine stufenhaltige Schneidspitze (51) und einen zwischen der Schneidspitze (51) und dem Schaft (59) befindlichen Führungsabschnitt (57) umfasst,
wobei das Schneidteil (55) und/oder die stufenhaltige Schneidspitze (51) folgendes umfasst:
- eine Mehrzahl in Umfangsrichtung verteilter, zwischen der Schneidspitze (51) und dem Schaft (59) verlaufender Führungsfasen (58), die als Rundschlifffasen ausgebildet sind und in einem Radius, der einem Außenradius (R) des Bohrwerkzeugs (50) entspricht, um eine Drehachse (A) des Bohrwerkzeugs (50) angeordnet sind,
- mindestens eine Vorbohrstufe (10; 20) mit einer Mehrzahl in Umfangsrichtung verteilter Schneiden (11; 21), deren radial außenliegende Nebenschneidkanten (12; 22) in einem kleineren Radius (r1; r2) als dem Außenradius (R) des Bohrwerkzeugs (50) angeordnet sind und an in Drehrichtung nachlaufende Außenflächen (15; 25) angrenzen, die als Hubschlifffasen mit einem Freiwinkel ausgebildet sind, und
- eine in axialer Richtung zwischen der mindestens einen Vorbohrstufe (10; 20) und den Führungsfasen (58) befindliche hintere Bohrstufe (30) mit einer Mehrzahl in Umfangsrichtung verteilter hinterer Schneiden (31), deren radial außenliegende Nebenschneidkanten (32) in dem Radius (r3), der dem Außenradius (R) des Bohrwerkzeugs (50) entspricht, angeordnet sind und an in Drehrichtung nachlaufende Außenflächen (35) angrenzen, die als Hubschlifffasen mit einem Freiwinkel ausgebildet sind.

2. Bohrwerkzeug (50) nach Anspruch 1,
**dadurch gekennzeichnet,**
**dass** die mindestens eine Vorbohrstufe (10; 20) eine erste und/oder vorderste Bohrstufe (10) mit einer Mehrzahl in Umfangsrichtung verteilter erster Schneiden (11) umfasst, deren radial außenliegende Nebenschneidkanten (12) in einem kleineren Radius (r1) als dem Außenradius (R) des Bohrwerkzeugs (50) angeordnet sind und an in Drehrichtung nachlaufende Außenflächen (15) angrenzen, die als Hubschlifffasen mit einem Freiwinkel ausgebildet sind.

3. Bohrwerkzeug (50) nach Anspruch 2,
**dadurch gekennzeichnet,**
**dass** die Nebenschneidkanten (12) der ersten und/oder vordersten Bohrstufe (10) in einem Radius (r1) angeordnet sind, der
- um zwischen 5 % bis 25 %, vorzugsweise um zwischen 5 % bis 15 % und/oder
- um zwischen 0,3 mm und 2,0 mm, vorzugsweise um zwischen 0,5 mm und 1,0 mm kleiner ist als der Außenradius (R) des Bohrwerkzeugs (50).

4. Bohrwerkzeug (50) nach einem der Ansprüche 1 bis 3,
**dadurch gekennzeichnet,**
**dass** die mindestens eine Vorbohrstufe (10; 20) eine zweite und/oder mittlere Bohrstufe (20) mit einer Mehrzahl in Umfangsrichtung verteilter zweiter und/oder mittlerer Schneiden (21) umfasst, deren radial außenliegende Nebenschneidkanten (22) in einem kleineren Radius (r2) als dem Außenradius (R) des Bohrwerkzeugs (50) angeordnet sind und an in Drehrichtung nachlaufende Außenflächen (25) angrenzen, die als Hubschlifffasen mit einem Freiwinkel ausgebildet sind.

5. Bohrwerkzeug (50) nach Anspruch 4,
**dadurch gekennzeichnet,**
**dass** die Nebenschneidkanten (22) der mittleren und/oder zweiten Bohrstufe (20) in einem Radius (r2) angeordnet sind, der
- um zwischen 2 % bis 10 %, vorzugsweise um zwischen 3 % bis 5 % und/oder
- um zwischen 0,1 mm und 0,5 mm, vorzugsweise um zwischen 0,2 mm und 0,4 mm kleiner ist als der Außenradius (R) des Bohrwerkzeugs (50).

6. Bohrwerkzeug (50) nach einem der Ansprüche 1 bis 5,
**dadurch gekennzeichnet,**
**dass** das Schneidteil (55) und/oder die stufenhaltige Schneidspitze (51) genau drei Bohrstufen (10, 20, 30) mit in verschieden großen Radien (r1, r2, r3) verlaufenden, radial außenliegenden Nebenschneidkanten (12, 22, 32) aufweist,
umfassend
- eine erste und/oder vorderste Bohrstufe (10) mit Nebenschneidkanten (12) in einem ersten, kleinsten Radius (r1),
- eine zweite und/oder mittlere Bohrstufe (20) mit Nebenschneidkanten (22) in einem zweiten, mittleren Radius (r2) und
- die hintere Bohrstufe (30) mit Nebenschneidkanten (32) in einem dritten Radius (r3), der dem Außenradius (R) des Bohrwerkzeugs (50) entspricht.

7. Bohrwerkzeug (50) nach einem der Ansprüche 1 bis 6,
**dadurch gekennzeichnet,**
**dass** bei mindestens einer oder bei jeder Bohrstufe (10; 20; 30) die als Hubschlifffase ausgebildete Außenfläche (15; 25; 35) auf einem radialen Vorsprung (16; 26; 36) angeordnet ist, der durch eine Hinterschleifung und/oder Stufe (17; 27; 37) von einer jeweiligen Grundfläche (18; 28; 38) abgegrenzt ist, die einen geringeren Außenradius besitzt als die als Hubschlifffase ausgebildete Außenfläche (15; 25; 35) an ihrem in Drehrichtung nachlaufenden Ende.

8. Bohrwerkzeug (50) nach Anspruch 7,
**dadurch gekennzeichnet,**
- **dass** die Grundfläche (18; 28; 38) der jeweiligen Bohrstufe (10; 20; 30) einen überwiegenden azimutalen Winkelanteil eines zwischen zwischen Drallwinkeln benachbarter Spannuten (9) verbleibenden azimutalen Winkelbereichs überbrückt,
- wohingegen die als Hubschlifffase ausgebildete Außenfläche (15; 25; 35) auf dem radialen Vorsprung (16; 26; 36) der jeweiligen Bohrstufe (10; 20; 30) einen azimutalen Winkelbereich einnimmt, der höchstens ein Fünftel, vorzugsweise höchstens ein Zehntel des azimutalen Winkelbereichs zwischen den Drallwinkeln der benachbarten Spannuten (9) beträgt.

9. Bohrwerkzeug (50) nach einem der Ansprüche 4 bis 8,
**dadurch gekennzeichnet**,
die Differenz zwischen
- dem Radius (r3) der Nebenschneidkanten (32) der hinteren Bohrstufe (30) und
- dem Radius (r2) der Nebenschneidkanten (22) der mittleren Bohrstufe (20),
jeweils von der Drehachse (A) aus gemessen, kleiner ist als die Differenz zwischen
- dem Radius (r2) der Nebenschneidkanten (22) der mittleren Bohrstufe (20) und
- dem Radius (r1) der Nebenschneidkanten (12) der vordersten Bohrstufe (10), jeweils von der Drehachse (A) aus gemessen.

10. Bohrwerkzeug (50) nach einem der Ansprüche 6 bis 9,
**dadurch gekennzeichnet,**
**dass** die Nebenschneidkanten (22) der mittleren Bohrstufe (30) den Nebenschneidkanten (32) der hinteren Bohrstufe (30) in Drehrichtung vorauseilend angeordnet sind.

11. Bohrwerkzeug (50) nach einem der Ansprüche 1 bis 10,
**dadurch gekennzeichnet,**
**dass** das Bohrwerkzeug (50) an einem Übergang zwischen
- einem hinteren Ende der jeweiligen nachlaufenden Außenfläche (35) der hinteren Bohrstufe (30) und
- einem vorderen Ende einer jeweiligen Führungsfase (58)
eine Übergangsfläche aufweist, die eine mit einem azimutalen Winkel variierende Abstandsdifferenz zwischen
- einem winkelabhängig variierenden Abstand der nachlaufenden Außenfläche (35) der hinteren Bohrstufe (30) von der Drehachse (A) und
- dem Abstand der jeweiligen Führungsfase (58) von der Drehachse (A) überbrückt.

12. Bohrwerkzeug (50) nach Anspruch 11,
**dadurch gekennzeichnet,**
**dass** die an den Außenradius (R) des Bohrwerkzeugs (50) heranreichende Übergangsfläche mindestens eine Kante aufweist, nämlich
- eine an ein vorderes Ende einer als Rundschlifffase ausgebildeten jeweiligen Führungsfase (58) angrenzende gebogene äußere Kante, die im Abstand des Außenradius (R) des Bohrwerkzeugs (50) angeordnet ist und im Wesentlichen azimutal verläuft, und/oder
- eine gebogene innere Kante, die an eine als Hubschlifffase ausgebildete Außenfläche (35) einer jeweiligen hinteren Schneide (31) angrenzt.

13. Bohrwerkzeug (50) nach Anspruch 11 oder 12,
**dadurch gekennzeichnet,**
**dass** die Übergangsfläche eine Flächennormalenrichtung oder eine Vielzahl lokaler Flächennormalenrichtungen aufweist, die mit einer durch die Drehachse (A) vorgegebenen axialen Richtung einen kleineren Winkel einschließt als mit Richtungen innerhalb einer Ebene senkrecht zur axialen Richtung.
